Europäisches Patentamt

European Patent Office

Office européen des brevets

(19)

(11) **EP 1 526 385 B1**

(12) **EUROPEAN PATENT SPECIFICATION**

(45) Date of publication and mention
of the grant of the patent:
**09.08.2006   Bulletin 2006/32**

(51) Int Cl.:
*G01R 27/02* (2006.01)        *G01M 17/02* (2006.01)
*B60C 23/06* (2006.01)

(21) Application number: **03425685.9**

(22) Date of filing: **21.10.2003**

(54) **Method for determining the physical features of a tire**

Verfahren zur Bestimmung der physischen Merkmale eines Luftreifens

Méthode pour déterminer les caractéristiques physiques d'un pneumatique

(84) Designated Contracting States:
**DE FR GB IT**

(43) Date of publication of application:
**27.04.2005   Bulletin 2005/17**

(73) Proprietor: **STMicroelectronics S.r.l.**
**20041 Agrate Brianza (Milano) (IT)**

(72) Inventors:
• **Sergio, Maximilian**
  **40044 Sasso Marconi (BO) (IT)**
• **Manaresi, Nicolo**
  **40125 Bologna (IT)**
• **Tartagni, Marco**
  **47014 Meldola (FC) (IT)**
• **Guerrieri, Roberto**
  **40122 Bologna (IT)**

• **Canegallo, Roberto**
  **15057 Tortona (AL) (IT)**

(74) Representative: **Mittler, Enrico et al**
  **Mittler & C. s.r.l.,**
  **Viale Lombardia, 20**
  **20131 Milano (IT)**

(56) References cited:
• **A. TODOROKI ET AL.: "Wireless strain monitoring using electrical capacitance change of tire: part I-with oscillating circuit" SMART MATERIALS AND STRUCTURES, [Online] vol. 12, 6 May 2003 (2003-05-06), pages 403-409, XP002273201 Retrieved from the Internet: < URL:http://ej.iop.org/links/q44/oYwkD6zWo hJi0iHY2NR8+w/sm3311.pdf> [retrieved on 2004-03-11]**

**Description**

The present invention refers to a method for the determination of the physical features of a tire, for example the deformations that it undergoes during the use.

Recently the safety of the cars has increased thanks to the installation of various types of sensors and to the relative electronic control systems.

Also the tires are under study to avoid that the wear and possibly the explosion could create problems to the motorvehicle occupants.

Normally the deformations of the tread are measured by application of sensors to the tires, and the measurement systems provide the data related to the contact condition of the tire with the road.

A method that uses the structure of the tire as a sensor is described by the article of A. Todoroki, S. Miyatani, and Y. Shimamura, "Wireless Strain Monitoring using electrical capacitance change of tire: part I with oscillating circuit", Smart material and structure, Institute of Physics Publishing, no. 12, pp. 410-416, 2003. It describes a measurement method of the deformations that uses the tire steel wires as electrodes of a capacitor. The steel wires are connected to an oscillating circuit of the LC type, and the frequency variations of the oscillator correspond to the variations of the capacitor capacity.

In view of the state of the art described, it is an object of the present invention to provide a measurement method of the physical features of a tire which has a higher precision and is able to give further information in comparison with the known methods.

According to the present invention, such an object is achieved by means of a method for the determination of the physical features of a tire, said tire comprising at least a first belt reinforced with a plurality of metallic wires, characterized by comprising the following phases: providing a signal between a first and a second metallic wire; determining the real part and the imaginary part of the impedance between said first metallic wire and said second metallic wire.

The Applicant has realized that the tire is not constituted by an insulating material, and it is possible to get important information also from the tire resistance variations. Thanks to the measure both of the capacity and of the resistance it is possible to have a better interpretation of the tire deformations. Besides the Applicant has found that it is possible to carry out the measures both on the wires of the same belt and on the wires of different belts, in this way interpreting at the best the obtainable information. The measure of the resistance combined with that of the capacity allows to better appraise the thickness variations of the belts and even more those of the single belt. Further, two characteristic parameters of the tire are under control, that is Band p. It has been also noticed that the resistance has a link with the temperature assumed by the tire, and therefore measuring the real part of the impedance it is possible to get information on the temperature variation of the tire.

The features and the advantages of the present invention will be made more evident by the following detailed description of a particular embodiment, illustrated as a non-limiting example in the annexed drawings, wherein:

figure 1 shows in perspective a schematized partial structure of a tire;
figure 2 shows a schematic representation of the tire belts;
figure 3 shows a measurement system of a impedance matrix;
figure 4 shows a graph in which the capacitor value variations are represented with respect to a sample deformation.

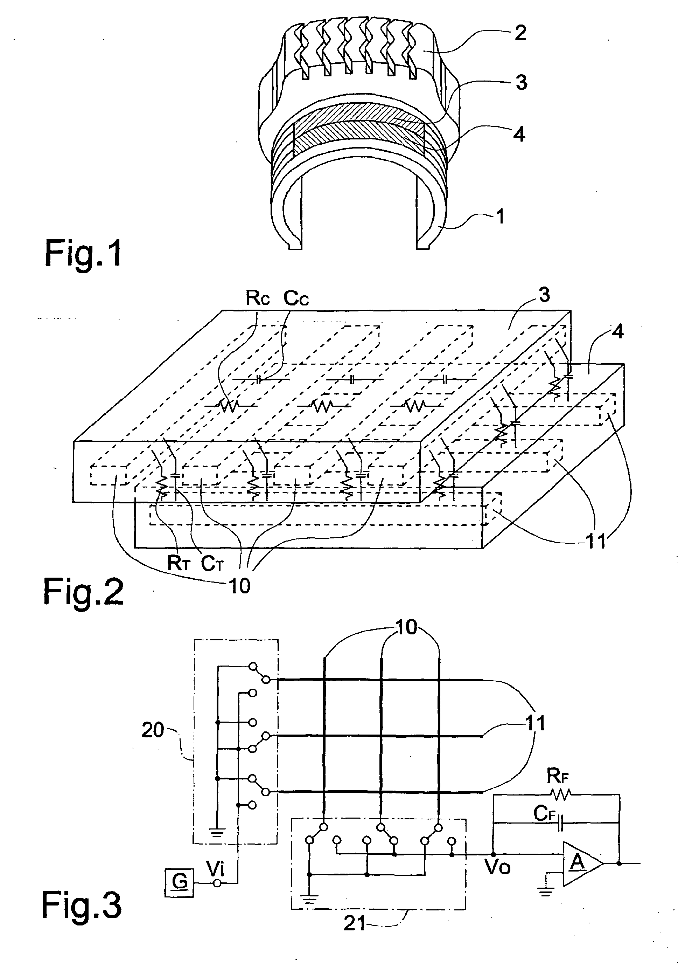

A tire, schematized in figure 1, comprises a carcass 1 having a toroidal shape consisting of at least a material layer reinforced with wires placed in radial planes and a tread 2 placed above the carcass 1. Between the carcass 1 and the tread 2 two belts 3 and 4 are placed. Every belt is constituted by a reinforced rubber layer with steel wires which are parallel to each other. The belts 3 and 4 have the steel wires tilted with respect to the equatorial plan of the tire, normally of about 20°, and they are placed so that the wires of a belt intersect the wires of the other belt. That is, if the wires of a belt are tilted toward right the wires of the other belt are tilted toward left, and therefore they form an angle of about 40° with each other.

The force that practices between the tire and ground can be represented by a vector with two components. One component perpendicular to the contact surface and one tangential. The tangential component can subsequently be divided in a parallel component and a perpendicular component with respect to the equatorial plan of the tire.

Reference is now made to figure 2 where the belts 3 and 4 are schematically represented. For every belt the reinforcement wires have been schematized, that in this case form an angle of 90° with each other, particularly; the belt 3 is composed by the wires 10 and the belt 4 is composed by the wires 11.

Impedances are represented, composed by a resistance and by a capacitor in parallel, between the wires belonging to the two belts as the resistance RT and the capacitor CT and impedances between the wires belonging to the same belt like the resistance RC and the capacitor CC.

We consider for example the wires between the same belt. The coupling between the two electrodes, represented by the wires, behaves as a distributed capacitor, while the rubber in the middle behaves as a resistance.

The capacitor can be calculated by the following relation.

$$C = \varepsilon \frac{S}{d}$$

where $\varepsilon$ is the dielectric constant of the rubber, S is the area between the two faced electrodes and d is the distance between the electrodes.

The resistance can be calculated by the following relation.

$$R = \rho d$$

where p is the resistance for length unity of the rubber and d is the distance between the electrodes.

When a tire meets an obstacle, the deformation of the tread is transferred to the reinforcement wires of the belts 3 and 4. The deformation causes a variation of the space between the wires, and this variation is translated into a variation of the capacity capacitor and of the resistance value. For example, when the wire lengthens, the distance d increases and the capacity decreases while the resistance increases.

Measuring the impedance variations it is then possible to determine the tire deformation, and since the movement is proportional to the force, it allows to measure the forces applied to the tire.

There are a lot of impedance measurement systems, and systems to determine, in the particular case, the resistance value and the capacitor value, an example of a measurement system is shown in figure 3.

In this case we refer to the case in which the impedance is measured between the wires of two belts.

A switching system 20 allows to selectively apply the signal coming from a generator G to the wires 11 of the belt 4.

A switching system 21 allows to selectively apply a charge to the amplifier A from the wires 10 of the belt 3.

Preferably, the wires to which the signal has not been applied or to those to which the amplifier A is not connected, are connected to ground by the switching systems 20 and 21.

The signal received by the wires 10 is applied to the not-inverting input of the amplifier A, the inverting input is connected to ground, and between the not-inverting input and the output a capacitor CF and a resistance RF have been applied.

The transfer function of the measuring circuit is the following.

$$\frac{V_0}{Vi}(j\omega) = -\frac{Rf}{Rt}\left(\frac{1 + j\omega R_T C_T}{1 + j\omega R_F C_F}\right)$$

where V0 is the output voltage of the wires 10, and Vi is the input voltage.

In a low frequency range, for example of the order of some kHz, there is that $\omega$ « 1/(RTCT) and $\omega$ « 1/(RFCF) and the preceding relation can be rounded to V0/Vi=-(RF/RT), therefore it is possible to determine the resistance value, that is the real part of the impedance.

In a high frequency range, for example of the order of some MHz, there is that $\omega$ >> 1/(RTCT) and $\omega$ >> 1/(RFCF) and the preceding relation can be rounded to V0/Vi=-(CT/C therefore it is possible to determine the value of the capacitor, that is the imaginary part of the impedance.

By means of the switching systems 20 and 21 all the wires can be scanned and have in this way a punctual map of the tire mechanical deformation.

It is carried out a measure on a tire sample comprising two belts. An electrode has been applied to a wire of a belt and another electrode has been applied to a wire of the other belt, to measure the impedance an impedances meter LCR has been used, and a strain meter has been applied for measuring the tensile force applied to the sample.

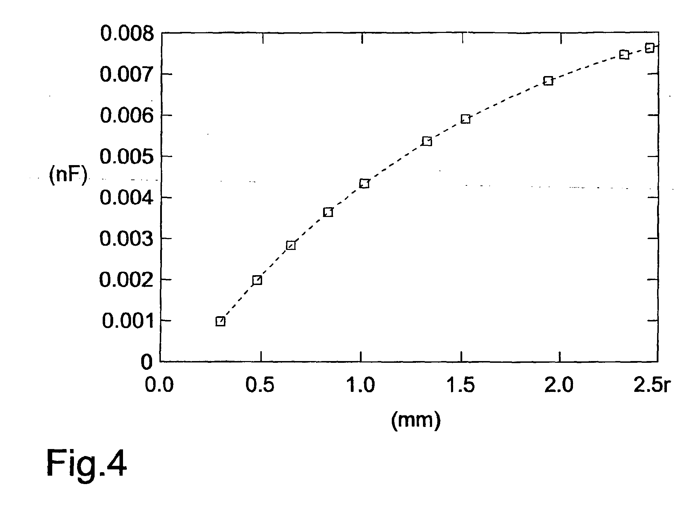

In figure 4 the capacitor value variations with respect to the deformation of the sample are shown. Particularly, on the axis x the component of the perpendicular force to the equatorial plan of the tire is reported, that is the movement in mm, while on the axis y the corresponding variation of the capacity in nF is reported.

As the tensile force increases, the thickness of the sample decreases, so as the distance between the electrodes, and accordingly the capacity increases. Then the increasing of the capacity, saturate for a tensile force equal to about 2,5 $\mu$m for the fact of the presence of the tire reinforcement structures.

It has been noticed that a deformation of 0,6% of the linear dimension of the tire causes a 7% variation of the capacity.

It has been measured another tire sample constituted by only a belt, and therefore the resistance has been measured between the electrodes of the same layer of the belt. The tensile force has been statically applied between 0 and 3 mm. Because of its linear deformation, the distance between the electrodes increases, the thickness decreases, and the resistance increases. Using a single belt there are not further reinforcement structures of the tire and therefore there is not the saturation effect. The results of the measures are reported in the Table 1.

Table 1

|  | Extension of the sample of 1mm | Extension of the sample of 2mm | Extension of the sample of 3mm |
| --- | --- | --- | --- |
| Measured resistance ($\Omega$) | 2300 | 2340 | 2380 |

It has been carried out a further measure on a tire sample comprising two belts of the type previously used. A tensile solicitation has been applied for the duration of 1 second with different forces. It has been noticed that the impedance measure instantly changes at the force application, therefore it reaches its static value, at demonstration that the relation between the impedance and the tensile force is linear.

**Claims**

1. Method for the determination of the physical features of a tire, said tire comprising at least a first belt reinforced with a plurality of metallic wires,
   **characterized by** comprising the following phases:

   providing a signal between a first and a second metallic wire;
   determining the real part and the imaginary part of the impedance between said first metallic wire and said second metallic wire.

2. Method according to claim 1 **characterized in that** said first metallic wire belongs to said first belt and said second metallic wire belongs to said first belt.

3. Method according to claim 1 **characterized in that** said tire comprises a second belt reinforced with a plurality of metallic wires and said first metallic wire belongs to said first belt and said second metallic wire belongs to said second belt.

4. Method according to claim 3 **characterized in that** said plurality of metallic wires of said first and second reinforced belt are connected to ground except said first and second metallic wire.

5. Method to produce the mechanical deformation map of a tire **characterized by** scanning sequentially every couple of metallic wires by means of the method of claim 1.

**Patentansprüche**

1. Verfahren zum Bestimmen der physikalischen Eigenschaften eines Reifens, wobei der Reifen zumindest einen ersten Gürtel enthält, der mit einer Mehrzahl von Metalldrähten verstärkt ist,
   **dadurch gekennzeichnet, dass** es die folgenden Phasen enthält:

   Bereitstellen eines Signals zwischen einem ersten und einem zweiten Metalldraht,
   Bestimmen des Realteils und des Imaginärteils der Impedanz zwischen dem ersten und dem zweiten Metalldraht.

2. Verfahren nach Anspruch 1, **dadurch gekennzeichnet, dass** der erste Metalldraht zu dem ersten Gürtel gehört und der zweite Metalldraht zu dem ersten Gürtel gehört.

3. Verfahren nach Anspruch 1, **dadurch gekennzeichnet, dass**

der Reifen einen zweiten Gürtel enthält, der mit einer Mehrzahl von Metalldrähten verstärkt ist,
der erste Metalldraht zu dem ersten Gürtel gehört und
der zweite Metalldraht zu dem zweiten Gürtel gehört.

**4.** Verfahren nach Anspruch 3, **dadurch gekennzeichnet, dass** die Mehrzahl von Metalldrähten des ersten und des zweiten verstärkten Gürtels außer dem ersten und dem zweiten Metalldraht mit Masse verbunden sind.

**5.** Verfahren zum Erstellen einer Karte der mechanischen Verformung eines Reifens, **gekennzeichnet durch** aufeinanderfolgendes Abtasten jedes Paares von Metalldrähten mittels des Verfahrens gemäß Anspruch 1.

**Revendications**

**1.** Procédé de détermination des caractéristiques physiques d'un pneumatique, ledit pneumatique comprenant au moins une première ceinture renforcée avec une pluralité de fils métalliques,
**caractérisé en ce qu'**il comprend les phases suivantes :

fournir un signal entre un premier et un deuxième fil métallique ;
déterminer la part réelle et la part imaginaire de l'mpédance entre ledit premier fil métallique et ledit deuxième fil métallique.

**2.** Procédé selon la revendication 1 **caractérisé en ce que** ledit premier fil métallique appartient à ladite première ceinture et ledit deuxième fil métallique appartient à ladite première ceinture.

**3.** Procédé selon la revendication 1 **caractérisé en ce que** ledit pneumatique comprend une deuxième ceinture renforcée avec une pluralité de fils métalliques et ledit premier fil métallique appartient à ladite première ceinture et ledit deuxième fil métallique appartient à ladite deuxième ceinture.

**4.** Procédé selon la revendication 3 **caractérisé en ce que** ladite pluralité de fils métalliques desdites première et deuxième ceintures renforcées sont raccordées à la terre à l'exception desdits premier et deuxième fils métalliques.

**5.** Procédé de production de la carte de déformation mécanique d'un pneumatique **caractérisé par** le balayage séquentiel de chaque couple de fils métalliques au moyen du procédé de la revendication 1.

**Fig.1**

**Fig.2**

**Fig.3**

Fig.4